# FASCICULE DE BREVET EUROPEEN

(11) **EP 4 258 953 B1**
(45) Date de publication et mention de la délivrance du brevet: **16.04.2025**
(21) Numéro de dépôt: 21819911.5
(22) Date de dépôt: 08.12.2021
(51) Int. Cl.: A47J 31/00, A47J 31/02, A47J 31/06

(54) **DISPOSITIF D'INTRODUCTION CONTRÔLÉE D'UN LIQUIDE DANS UN CONTENANT**
VORRICHTUNG ZUM KONTROLLIERTEN EINBRINGEN EINER FLÜSSIGKEIT IN EINEN BEHÄLTER
DEVICE FOR CONTROLLED INTRODUCTION OF A LIQUID INTO A CONTAINER

(30) Priorité: 08.12.2020 FR 2012859
(43) Date de publication de la demande: 18.10.2023
(73) Titulaire: Peugeot Saveurs, 25440 Quingey (FR)
(72) Inventeur: GOURAND, Thierry, 39380 BANS (FR); BROUILLAC, Nicolas, 25410 SAINT VIT (FR); AUBRY, Frédéric, 70000 CHARMOILLE (FR)
(74) Mandataire: Cabinet Bleger-Rhein-Poupon
(86) Numéro de dépôt international: PCT/EP2021/084688
(87) Numéro de publication internationale: WO 2022/122781

(56) Documents cités:
- WO-A1-2016/023724
- WO-A1-2016/115055
- US-A1- 2008 148 956

## Description

La présente invention a pour objet un dispositif pour introduire un liquide de manière contrôlée dans un contenant, comme en particulier de l'eau dans un filtre à café.

De manière classique, la préparation de café repose sur une extraction des composants aromatiques contenus dans ses grains au moyen d'une quantité adaptée d'eau chaude. De nombreux équipements ont d'ores et déjà été développés au fil du temps à cet effet, de sorte que les consommateurs disposent aujourd'hui d'une offre variée d'appareils pour la préparation de café, basés sur différentes techniques, permettant chacun d'obtenir un résultat propre et par conséquent de répondre à des attentes différentes.

Ainsi, à l'heure actuelle, un consommateur de café a la possibilité aussi bien de s'orienter vers une machine automatique sophistiquée, polyvalente, et le cas échéant programmable, que d'opter pour une méthode manuelle nécessitant uniquement de disposer d'un filtre à café et d'une verseuse.

Conformément à leur principe même de fonctionnement, les appareils automatiques n'offrent aux utilisateurs que très peu de possibilités d'intervention en vue éventuellement d'influer sur le résultat final. Dès lors, les méthodes manuelles demeurent généralement plébiscitées pour préparer un café dont on souhaite pouvoir révéler toutes les saveurs, dans la mesure où elles permettent de déterminer puis d'appliquer soi-même les paramètres les plus favorables.

Par ailleurs, il a également été observé qu'après des décennies d'engouement pour les appareils électroménagers, permettant de privilégier l'automatisation et la rapidité de préparation, un nombre croissant de consommateurs manifeste aujourd'hui un intérêt pour des solutions alternatives, manuelles, plus douces, plus à même de préserver la qualité des produits employés et garantissant également un meilleur respect de l'environnement.

Dans le domaine de la préparation du café, cette tendance se traduit par l'adoption de plus en plus fréquente de la méthode dite du « slow coffee », qui correspond en réalité à un retour au café « à l'ancienne », consistant à couler de l'eau préalablement chauffée à la bonne température sur un filtre rempli de café moulu placé au-dessus d'un récipient.

De manière connue, afin d'obtenir une boisson dont les qualités gustatives du grain sélectionné sont pleinement exaltées, cette méthode de préparation du café nécessite le respect d'un rituel précis prévoyant le versement de l'eau en plusieurs étapes ainsi qu'une phase de pré-infusion suivie d'une phase d'infusion.

Plus précisément, pour accomplir la phase de pré-infusion, il est préconisé de verser une première fraction du volume total d'eau chaude nécessaire, sur le café contenu dans le filtre, au moyen d'une bouilloire de type « col de cygne » présentant un bec allongé permettant de diriger précisément le filet d'eau, préférentiellement en spirale depuis le centre du filtre vers son bord, sans toutefois toucher celui-ci. Puis, un temps d'attente, permettant à la mouture d'absorber toute l'eau ainsi versée, doit être respecté.

La phase d'infusion consiste ensuite à répandre le volume restant d'eau chaude, en plusieurs fois, toujours du même geste en spirale du centre du filtre vers son bord, en arrêtant de verser dès que le niveau d'eau atteint celui-ci, puis en poursuivant dès que toute l'eau versée a traversé la mouture. A chaque fois, il est préconisé d'attendre que l'eau ait fini de s'écouler dans le récipient placé sous le filtre avant d'en verser une nouvelle fraction.

Bien entendu, comme pour toutes les méthodes de préparation disponibles, le café est prêt lorsque le volume total d'eau prévu est passé à travers la mouture.

En pratique, cette méthode présente effectivement l'avantage d'offrir à l'utilisateur une certaine latitude dans sa mise en œuvre et par conséquent une possibilité d'adaptation des paramètres et de contrôle du résultat escompté, lequel est en outre obtenu via une extraction douce, respectueuse du produit. Toutefois, elle peut s'avérer chronophage, et requiert de la disponibilité ainsi qu'un équipement spécifique dans la mesure où elle monopolise une personne pour verser l'eau progressivement ainsi qu'une bouilloire de structure adaptée permettant d'accomplir le geste en spirale dans les règles de l'art. Un exemple de dispositif connu pour introduire un liquide dans du café est illustré dans WO-A1-2016/115055.

Le but de la présente invention est de pallier ces inconvénients et de proposer une solution permettant de simplifier la réalisation du « slow coffee » pour l'utilisateur, tout en garantissant le respect du processus décrit ci-dessus. En particulier, l'objectif de l'invention est de fournir une solution qui soit adaptée pour réaliser une répartition de l'eau, versée par l'utilisateur en une seule fois au moyen d'une bouilloire électrique de structure standard, en plusieurs fractions successives sur la mouture. D'autre part, une solution a également été recherchée pour reproduire les effets du geste technique en spirale de l'utilisateur. Par ailleurs, un autre but de l'invention est de fournir un ustensile de structure simple dont le coût de production est maitrisé, et qui soit abordable pour le consommateur.

A cet effet, l'invention a pour objet un dispositif pour introduire un liquide de manière contrôlée dans un contenant comprenant les caractéristiques de la revendication 1.

Un tel dispositif a pour avantage de permettre un versement en une seule fois par l'utilisateur de la totalité de l'eau requise pour préparer une quantité donnée de café, puis d'obtenir les phases successives de pré-infusion et d'infusion ainsi que les temps d'attente requis, indépendamment de toute contribution additionnelle de sa part et sans nécessiter d'ustensile de forme spécifique. En d'autres termes, grâce à une telle solution, l'intervention de l'utilisateur est limitée au versement en une seule étape de l'eau chaude, et peut être accomplie au moyen d'une bouilloire ordinaire dont la plupart des foyers sont généralement couramment équipés.

Par ailleurs, selon le cas, le dispositif selon l'invention peut également présenter l'une ou plusieurs des caractéristiques suivantes :
- les premiers et les seconds moyens de distribution sont adaptés pour contrôler le débit respectivement de la première fraction et de la seconde fraction du volume total de liquide introduites depuis ledit réservoir dans ledit contenant.
- l'orifice de sortie primaire et le conduit présentent respectivement un diamètre d0 et une longueur L propres à obtenir une introduction d'un volume donné de la première fraction V1 de liquide depuis le réservoir principal vers ledit contenant.
- le trou que comporte le réservoir principal et l'orifice de sortie primaire que comporte le bol sont alignés sur l'axe du bol.
- le diamètre d1 de l'orifice de sortie secondaire est adapté pour obtenir une durée donnée du second laps de temps.
- le diamètre d0 de l'orifice de sortie primaire et la longueur L du conduit étant fixés, la longueur L1 de la première branche du tube et le diamètre d2 de la lumière sont choisis de manière telle qu'une période P, intercalée entre le premier laps de temps LT1 et le second laps de temps LT2, est observée, au cours de laquelle aucun liquide ne s'écoule du bol 2.
- le tube est réalisé en un matériau flexible et guidé dans sa forme en « U » au moyen d'un organe support présentant une gouttière en forme de « U » dans laquelle il est logé.
- les premiers moyens de distribution comportent un unique orifice de sortie primaire de diamètre d0 ainsi qu'un unique conduit de longueur L reliant l'orifice de sortie primaire au réservoir principal, tandis que les seconds moyens de distribution comportent trois lumières de diamètre d2, et trois orifices de sortie secondaires de diamètre d1, communiquant chacun avec l'extrémité de sortie d'un tube en « U ».
- les trois lumières et les trois orifices de sortie secondaires sont répartis sur des cercles centrés sur l'orifice de sortie primaire, respectivement de rayon R1 et de rayon R2.

Le rayon R1 est inférieur au rayon R2 tandis que les trois lumières et les trois orifices de sortie secondaires sont régulièrement espacés entre eux d'un angle de 120°.
- le fond du bol présente une face interne d'allure convexe.
- la cloison en forme de cuvette est amovible et comporte un rebord adapté pour reposer sur un bord libre de la paroi périphérique du bol.

Les avantages découlant de la présente invention apparaîtront à la lecture de la description qui va suivre se rapportant à un exemple de réalisation illustré dans les dessins joints dans lesquels :

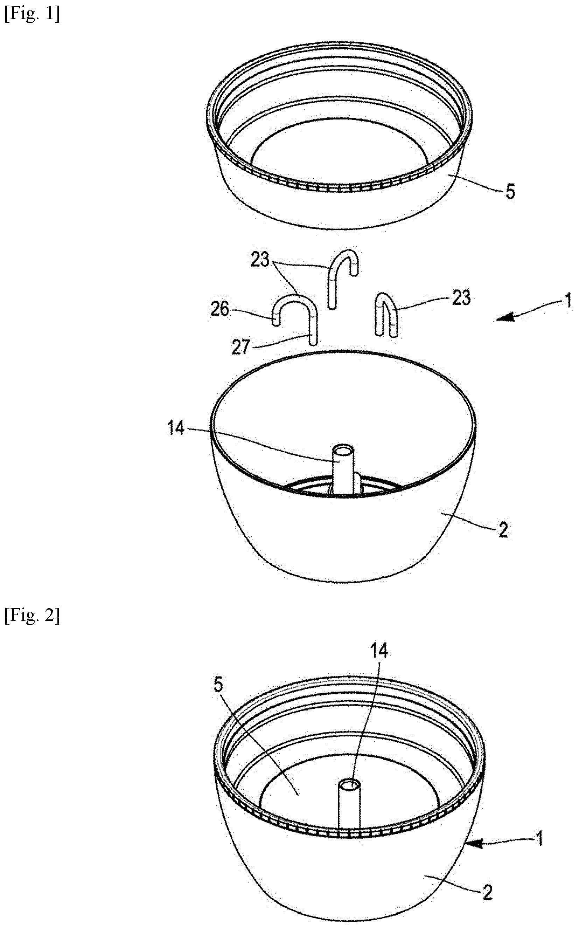

[Fig. 1] est une vue en perspective éclatée d'une variante de réalisation du dispositif selon l'invention, comportant un bol muni d'une cloison de séparation en forme de cuvette amovible,
[Fig. 2] est une vue en perspective du dispositif de la figure 1,
[Fig. 3] est une vue de dessus du bol que comporte le dispositif de la fi-gure 1,
[Fig. 4] est une vue de dessous du bol que comporte le dispositif de la figure 1
[Fig. 5] est une vue de dessus de la cloison en forme de cuvette du dispositif de la figure 1, et
[Fig. 6] à [Fig. 14] sont des vues en coupe du dispositif de la figure 1 illustrant les différentes étapes de la distribution d'un liquide avec son aide.

Dans la variante de réalisation illustrée aux figures, le dispositif 1 selon l'invention est destiné à permettre une introduction d'eau dans un filtre à café de manière contrôlée, c'est-à-dire selon une répartition particulière dans le filtre à café et en différentes étapes.

Il est avantageusement réalisé en un matériau plastique facile d'entretien et comporte un bol 2, dont le volume interne est séparé en un réservoir principal 3 et un réservoir secondaire 4, au moyen d'une cloison de séparation en forme de cuvette 5 prévue ici amovible, également pour des raisons de facilité d'entretien.

Le bol 2 est délimité par une paroi périphérique 6 et présente un fond 7, ainsi qu'un bord libre 9 et présente une forme et des dimensions adaptées pour reposer sur un filtre à café de structure classique (non illustré), lui-même destiné à surmonter un récipient de type verseuse à café (non illustrée).

La cuvette 5 définit en fait le réservoir principal 3 du bol 2. Elle est munie d'un rebord 8 lui permettant de reposer simplement sur la paroi périphérique 6 du bol 2. Elle est conçue apte et destinée à accueillir, au travers d'un unique versement effectué par l'utilisateur, le volume total VT d'eau chaude nécessaire à la préparation d'une quantité désirée de boisson, par exemple trois tasses de café. Un repère 10, apposé sur sa paroi interne, matérialise son niveau de remplissage minimum.

Par ailleurs, le volume s'étendant entre le fond 7 du bol 2 et la cuvette 5 représente le réservoir secondaire 4 du bol 2.

En référence aux dessins, dans la variante de réalisation illustrée, le bol 2 comporte également un conduit 14, s'étendant le long de son axe X, depuis la face interne 15 de son fond 7. Ce conduit 14 présente une extrémité 17 d'entrée de liquide ainsi qu'une extrémité 16 de sortie de liquide qui débouche dans un orifice de sortie primaire 13, de diamètre d0, formé dans un renfoncement 11 que comporte la face interne 15 du fond 7 du bol 2.

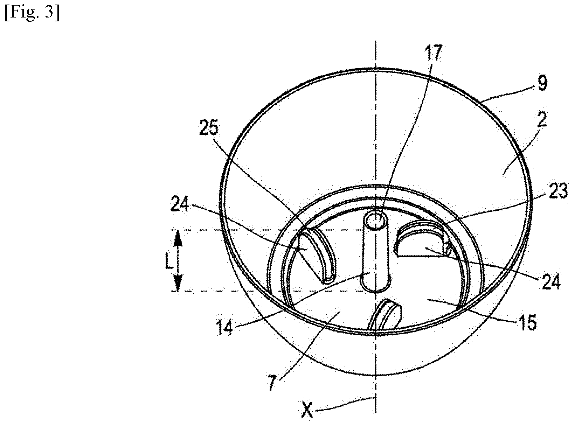

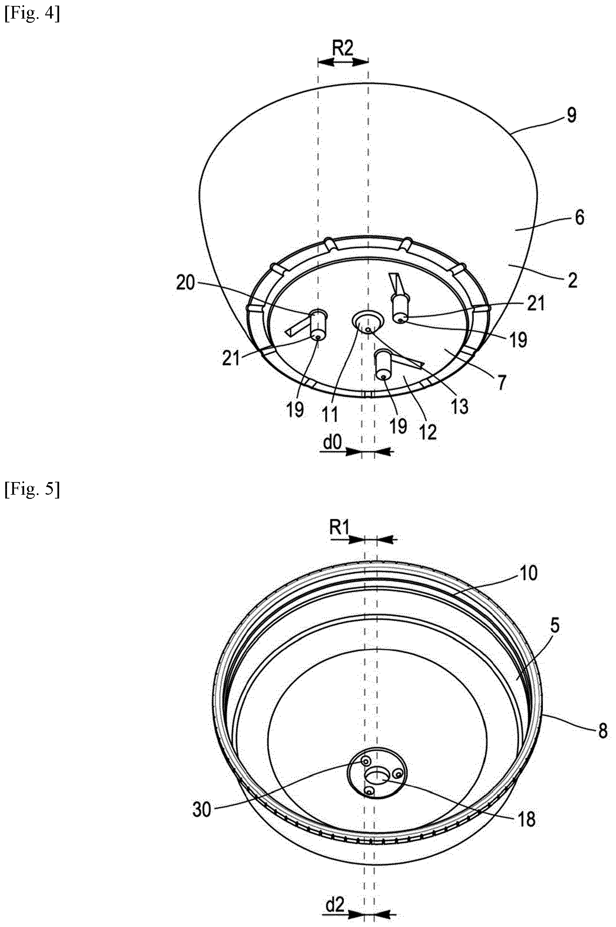

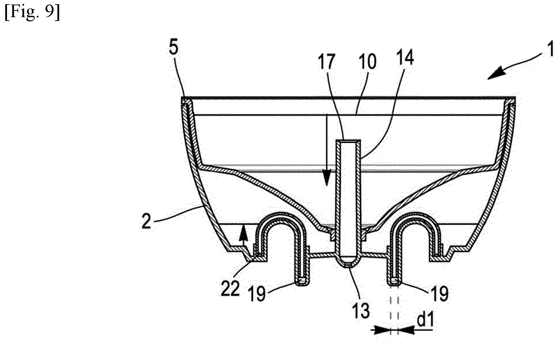

Ce dernier comporte également trois orifices de sortie secondaire 19, de diamètre d1, formés chacun dans un fond 21 d'une protubérance 20 d'allure tubulaire s'étendant depuis le fond 7 du bol 2 sous la face externe 12 de ce fond (cf. fig. 4 et 9). En somme, chaque protubérance tubulaire 20 présente une ouverture d'entrée 29 formée dans le fond 7 du bol 2, de sorte que chacune d'entre elles, et par conséquent chaque orifices de sortie secondaire 19, communique avec le réservoir secondaire 4. Tel qu'il apparaît des figures, dans la variante de réalisation illustrée, les trois orifices de sortie secondaires 19 sont répartis sur un cercle centré sur l'orifice de sortie primaire 13, de rayon R2. Ils sont espacés entre eux d'un angle de 120° (cf. fig. 3).

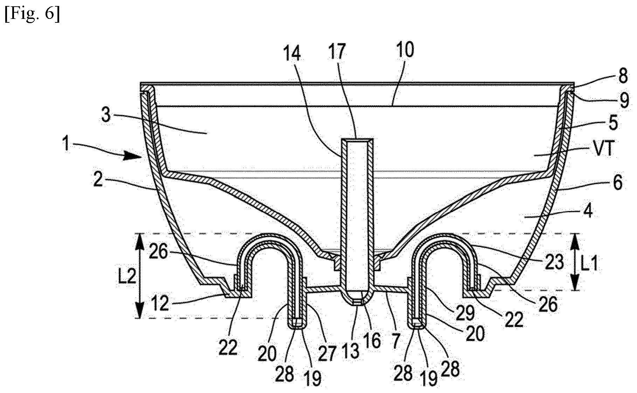

De plus, le bol 2 est encore équipé de trois tubes en « U »23, présentant chacun une première branche 26, de longueur L1, terminée par une extrémité d'entrée 22 ainsi qu'une seconde branche 27, de longueur L2 supérieure à L1, terminée par une extrémité de sortie 28. En fait, en référence aux figures, chaque seconde branche 27 d'un tube 23 est adaptée pour être logée dans une protubérance 20, de manière étanche, et de telle sorte que son extrémité de sortie 28 communique avec l'orifice de sortie secondaire 19 de ladite protubérance (cf. fig. 6). D'autre part, l'extrémité d'entrée 22 de chaque tube 23 affleure la face interne 15 du fond 7 du bol 2, sans toutefois la toucher.

D'autre part, dans la variante de réalisation illustrée, les trois tubes en « U » 23 sont réalisés en un matériau flexible, par exemple en silicone souple, et sont guidés chacun vers leur forme en « U » au moyen d'un organe support 24, présentant une gouttière 25 de forme incurvée, et qui est monté sur la face interne 15 du fond 7 du bol 2 à proximité immédiate de l'ouverture d'entrée 29 (cf. fig. 6) d'une protubérance 20.

Il convient en outre de remarquer que ladite face interne 15 du fond 7 est d'allure convexe.

Par ailleurs, la cuvette 5 présente un trou central 18 adapté pour être emboîté de manière étanche sur le conduit 14, lorsque la cuvette 5 repose sur le bol 2. En somme, grâce à une telle structure, l'extrémité 17 d'entrée de liquide du conduit 14 s'étend dans le réservoir principal 3 du dispositif 1, tandis que son extrémité 16 de sortie de liquide communique avec l'orifice de sortie primaire 13 du bol 2.

De plus, la longueur L du conduit 14 est choisie de manière telle que son extrémité 17 d'entrée de liquide se situe sous le repère 10 indiquant le niveau de remplissage minimum du réservoir principal 3 représenté par la cuvette 5.

Celle-ci est par ailleurs pourvue de trois lumières 30, de diamètre d2, réparties autour de son trou central 18, sur un cercle de rayon R1, inférieur à R2, et de manière régulièrement espacée entre elles, c'est-à-dire d'un angle de 120°.

En fait, conformément à l'invention, l'orifice de sortie primaire 13 et le conduit 14 définissent des premiers moyens de distribution adaptés pour introduire une première fraction V1 du volume total VT d'eau chaude contenu dans le réservoir principal 3 dans un filtre à café en un premier laps de temps LT1. Les lumières 30, les orifices de sortie secondaire 19 et les tubes 23 constituent quant à eux des seconds moyens de distribution adaptés pour introduire une seconde et dernière fraction V2 du volume total VT d'eau contenue dans le réservoir principal dans le filtre à café en un second laps de temps LT2 succédant au premier laps de temps LT1.

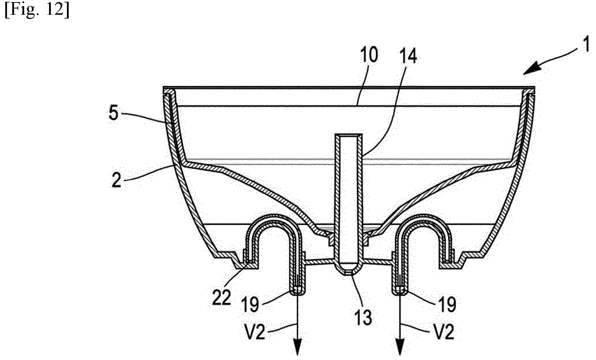

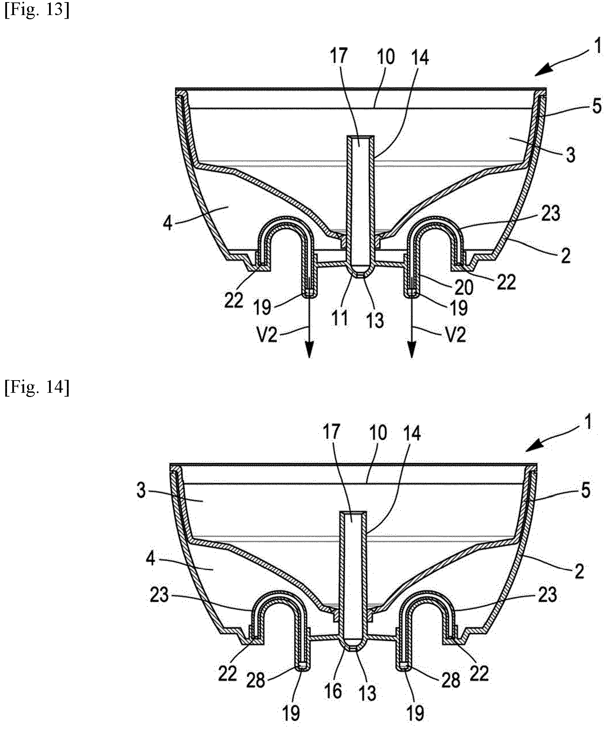

Ainsi, en référence aux figures 6 à 14, lors de la mise en œuvre du dispositif 1, pour introduire de l'eau de manière contrôlée dans un filtre à café (non illustré) au-dessus duquel le bol 2 a préalablement été placé, l'unique intervention de l'utilisateur consiste à remplir d'eau chaude le réservoir principal 3, définit par la cuvette 5, jusqu'à son niveau de remplissage minimum (cf. fig. 6), c'est-à-dire jusqu'au repère 10.

Grâce à la structure décrite ci-dessus, l'eau contenue dans le réservoir principal 3, va alors s'écouler progressivement dans le filtre à café, selon une répartition et une temporisation particulière, sans aucune intervention additionnelle de l'utilisateur.

Ainsi, au cours d'une première phase, une première fraction V1 du volume total VT de liquide contenu dans le réservoir principal 3 pénètre par l'ouverture d'entrée 17 dans le conduit 14, et s'écoule hors du bol 2 à travers l'orifice de sortie primaire 13, en un premier laps de temps LT1(cf. fig .6-8).

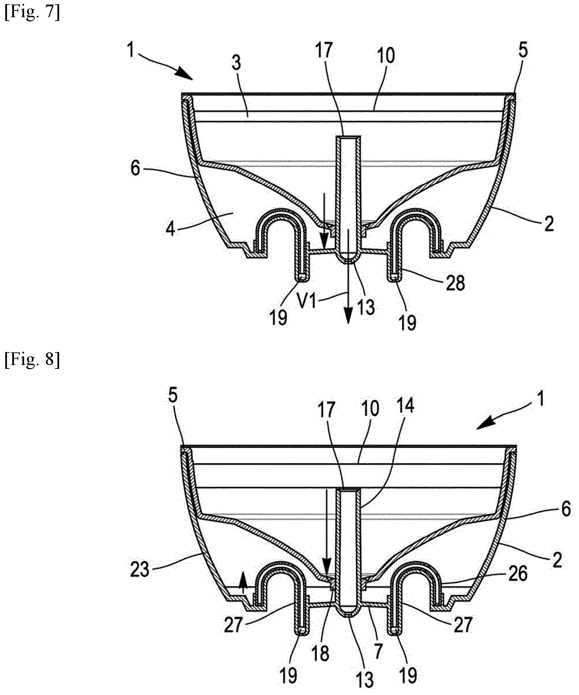

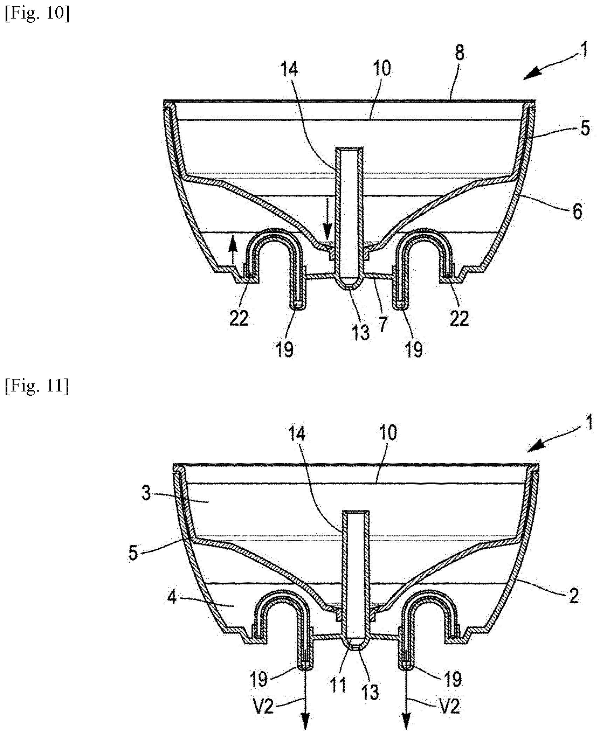

En parallèle, au cours de cette même première phase, une autre partie de l'eau contenue dans le réservoir principal 3 s'écoule également vers le réservoir secondaire 4 à travers les lumières 30 (cf. fig. 7). En remplissant le réservoir secondaire 4, l'eau pénètre par leur extrémité d'entrée 22 dans chacun des tubes 23 et monte progressivement dans la première branche 26 de chacun d'entre eux (cf. fig. 8 à fig. 10). Les tubes 23 jouent en fait le rôle de siphons, de sorte que lorsque le niveau d'eau contenu dans le réservoir secondaire 4 est tel qu'ils sont entièrement immergés (cf. fig. 11), ce qui intervient après un laps de temps LT'1, ces siphons s'amorcent et permettent à une seconde fraction V2 d'eau, correspondant en fait au restant du volume total VT, de s'écouler par les orifices de sortie secondaires 19 en un second laps de temps LT2 (cf. fig. 11 à fig. 14).

Plus précisément, les éléments constitutifs du dispositif 1 sont préférentiellement dimensionnés et structurés de manière telle que le laps de temps LT'1 démarre simultanément au premier laps de temps LT1 mais dure plus longtemps que celui-ci. Ainsi, une période P, intercalée entre le premier laps de temps LT1 et le second laps de temps LT2, est observée, au cours de laquelle aucun liquide ne s'écoule du dispositif 1. La durée de cette période P est déterminée par la longueur L1 de la première branche 26 des tubes 23 et le diamètre d2 des lumières 30 du réservoir principal 3, la longueur L du tube 14 et le diamètre d0 de l'orifice de sortie principal 13 ayant été fixé au préalable. Le laps de temps LT'1 (égal à LT1+P), correspond par conséquent à une durée pendant laquelle un volume V1 d'eau est distribué, prolongée d'une durée correspondant à un temps d'attente, et est susceptible de permettre avantageusement la pré-infusion d'une mouture de café placée dans un filtre disposé sous le bol 2.

Ce laps de temps LT'1 de pré-infusion du café dure aussi longtemps que les premières branches 26 des tubes 23 ne sont pas pleines et s'achève lorsque le niveau d'eau dans le réservoir secondaire 4 est suffisant pour que les siphons s'amorcent. C'est donc en jouant sur le diamètre d2 des lumières 30 et la longueur L1 des premières branches 26 des tubes 23 que l'on peut obtenir un dispositif 1 permettant d'obtenir une durée de pré-infusion plus ou moins longue, pour un diamètre d0 de l'orifice de sortie principal 13 et une longueur L du conduit 14 donnés. De plus, en faisant varier la longueur L du conduit 14 et le diamètre d0 de l'orifice de sortie principal 13, il est possible d'adapter la quantité V1 d'eau introduite dans un filtre à café au moyen du dispositif 1 selon l'invention pendant la phase de pré-infusion.

Quant à la phase d'infusion, correspondant au laps de temps LT2 durant lequel le volume d'eau V2 s'écoule par les orifices de sortie secondaires 19, sa durée peut avantageusement être modulée en choisissant un diamètre d1 donné en ce qui concerne les orifices de sortie secondaires 19.

D'autre part, le positionnement particulier de l'orifice de sortie primaire 13 et des orifices de sortie secondaires 19 permet une répartition homogène de l'eau distribuée au moyen du dispositif 1, dans le contenant considéré, et en particulier une répartition produisant les effets d'un versement en spirale par un utilisateur.

Il convient finalement encore de noter que la structure convexe de la face interne 15 du fond 7 du bol 2 permet avantageusement d'orienter l'eau en direction des ouvertures d'entrée 28 des tubes 23 et donc au réservoir secondaire 4 de se vider complètement à la fin du second laps de temps LT2.

## Revendications

1. Dispositif (1) pour introduire un liquide de manière contrôlée dans un contenant, comme en particulier de l'eau dans un filtre à café, comportant un bol (2) adapté pour reposer sur ledit contenant, formé d'une paroi périphérique (6) présentant un fond (7), et comportant un réservoir destiné à accueillir un volume total VT d'un liquide, des premiers moyens de distribution adaptés pour introduire une première fraction V1 du volume total VT de liquide contenu dans le réservoir dans le contenant en un premier laps de temps LT1 ainsi que des seconds moyens de distribution adaptés pour introduire une seconde fraction V2 du volume total VT de liquide contenu dans le réservoir dans le contenant en un second laps de temps LT2 succédant au premier laps de temps LT1, **caractérisé en ce que** le réservoir du bol (2) est départagé en un réservoir principal (3) et un réservoir secondaire (4) au moyen d'une cloison en forme de cuvette (5) s'étendant dans un plan transversal surplombant le fond (7) du bol (2), et **en ce que** le réservoir principal (3) est défini par le compartiment supérieur tandis que le réservoir secondaire (4) est défini par le compartiment inférieur et **en ce que** les premiers moyens de distribution comportent au moins un orifice de sortie primaire (13) formé dans le fond (7) de la paroi périphérique (6) du bol (2) et au moins un conduit (14) dont une première extrémité d'entrée de liquide (17) plonge dans le réservoir principal (3), à travers un trou (18) formé dans la cloison en forme de cuvette (5), et dont une seconde extrémité de sortie de liquide (16) communique avec ledit orifice de sortie primaire (13) et **en ce que** les seconds moyens de distribution comportent au moins une lumière (30), de diamètre d2, formée dans la cloison en forme de cuvette (5), permettant l'écoulement de la seconde fraction V2 de liquide depuis le réservoir principal (3) vers le réservoir secondaire (4), au moins un orifice de sortie secondaire (19), de diamètre d1, formé dans un fond (21) d'une protubérance d'allure tubulaire (20) s'étendant sous une face externe (12) du fond (7) du bol (2), et au moins un tube (23) dont une extrémité d'entrée de liquide (22) plonge dans le réservoir secondaire (4) et une extrémité de sortie de liquide (28) communique avec ledit orifice de sortie secondaire (19), ledit tube (23) étant conformé en « U » et présentant une première branche (26) de longueur L1 dont l'extrémité d'entrée (22) affleure une face interne (15) du fond (7) du bol (2) sans toutefois la toucher et une seconde branche (27) de longueur L2 supérieure à L1 logée de manière étanche dans ladite protubérance (20).

2. Dispositif (1) selon la revendication 1, **caractérisé en ce que** les premiers et les seconds moyens de distribution sont adaptés pour contrôler le débit respectivement de la première fraction V1 et de la seconde fraction V2 du volume total VT de liquide introduites depuis ledit réservoir dans ledit contenant.

3. Dispositif (1) selon l'une quelconque des revendications précédentes, **caractérisé en ce que** l'orifice de sortie primaire (13) et le conduit (14) présentent respectivement un diamètre d0 et une longueur L propres à obtenir une introduction d'un volume donné de la première fraction V1 de liquide depuis le réservoir principal (3) vers ledit contenant.

4. Dispositif (1) selon l'une quelconque des revendications précédentes , **caractérisé en ce que** le trou (18) que comporte le réservoir principal (3) et l'orifice de sortie primaire (13) que comporte le bol (2), respectivement formés dans la cloison en forme de cuvette (5) et dans le fond (7) du bol (2), sont alignés sur l'axe X du bol (2).

5. Dispositif (1) selon l'une quelconque des revendications précédentes, **caractérisé en ce que** le diamètre d1 de l'orifice de sortie secondaire (19) est adapté pour obtenir une durée donnée du second laps de temps LT2.

6. Dispositif (1) selon l'une quelconque des revendications précédentes, **caractérisé en ce que** le diamètre d0 de l'orifice de sortie primaire (13) et la longueur L du conduit (14) étant fixés, la longueur L1 de la première branche (26) du tube (23) et le diamètre d2 de la lumière (30) sont choisies de manière telle qu'une période P, intercalée entre le premier laps de temps LT1 et le second laps de temps LT2, est observée, au cours de laquelle aucun liquide ne s'écoule du bol 2.

7. Dispositif (1) selon l'une quelconque des revendications précédentes, **caractérisé en ce que** le tube (23) est réalisé en un matériau flexible et guidé dans sa forme en « U » au moyen d'un organe support (24) présentant une gouttière (25) en forme de « U » dans laquelle il est logé.

8. Dispositif (1) selon l'une quelconque des revendications précédentes, **caractérisé en ce que** les premiers moyens de distribution comportent un unique orifice de sortie primaire (13) de diamètre d0 ainsi qu'un unique conduit (14) de longueur L reliant ledit orifice de sortie primaire (13) au réservoir principal (3), tandis que les seconds moyens de distribution comportent trois lumières (30) de diamètre d2, et trois orifices de sortie secondaires (19) de diamètre d1, communiquant chacun avec l'extrémité de sortie (28) d'un tube en « U » (23).

9. Dispositif (1) selon la revendication précédente, **caractérisé en ce que** les trois lumières (30) et les trois orifices de sortie secondaires (19) sont répartis sur des cercles centrés sur l'orifice de sortie primaire (13), respectivement de rayon R1 et de rayon R2.

10. Dispositif (1) selon la revendication précédente, **caractérisé en ce que** R1 est inférieur à R2 et **en ce que** les trois lumières (30) et les trois orifices de sortie secondaires (19) sont régulièrement espacés entre eux d'un angle de 120°.

11. Dispositif (1) selon l'une quelconque des revendications précédentes, **caractérisé en ce que** le fond (7) du bol (2) présente une face interne (15) d'allure convexe.

12. Dispositif (1) selon l'une quelconque des revendications précédentes, **caractérisé en ce que** la cloison en forme de cuvette (5) est amovible et comporte un rebord (8) adapté pour reposer sur un bord libre (9) de la paroi périphérique (6) du bol (2).

## Patentansprüche

1. Vorrichtung (1) zum kontrollierten Einführen einer Flüssigkeit in einen Behälter, wie insbesondere Wasser in einen Kaffeefilter, der eine Schüssel (2) umfasst, die dazu geeignet ist, auf dem Behälter aufzuliegen, aus einer Umfangswand (6) mit einem Boden (7) gebildet ist und einen Vorratsbehälter umfasst, der dazu bestimmt ist, ein Gesamtvolumen VT einer Flüssigkeit aufzunehmen, erste Verteilungsmittel, die dazu geeignet sind, eine erste Fraktion V1 des Gesamtvolumens VT der im Vorratsbehälter enthaltenen Flüssigkeit in den Behälter in einem ersten Zeitraum LT1 einzuführen, sowie zweite Verteilungsmittel, die dazu geeignet sind, eine zweite Fraktion V2 des Gesamtvolumens VT der im Vorratsbehälter enthaltenen Flüssigkeit in den Behälter in einem zweiten Zeitraum LT2 nach dem ersten Zeitraum LT1 einzuführen, **dadurch gekennzeichnet, dass** der Vorratsbehälter der Schüssel (2) mittels einer schalenförmigen Trennwand (5), die sich in einer Querebene erstreckt und über den Boden (7) der Schüssel (2) hinausragt, in einen Hauptvorratsbehälter (3) und einen Nebenvorratsbehälter (4) unterteilt ist, und dadurch, dass der Hauptvorratsbehälter (3) durch die obere Kammer definiert ist, während der Nebenvorratsbehälter (4) durch die untere Kammer definiert ist, und dadurch, dass die ersten Verteilungsmittel mindestens eine primäre Auslassöffnung (13) umfassen, die im Boden (7) der Umfangswand (6) der Schüssel (2) gebildet ist, und mindestens einen Kanal (14), dessen erstes Flüssigkeitseinlassende (17) durch ein Loch (18), das in der schalenförmigen Trennwand (5) gebildet ist, in den Hauptvorratsbehälter (3) eintaucht, und dessen zweites Flüssigkeitsauslassende (16) mit der primären Auslassöffnung (13) in Verbindung steht, und dadurch, dass die zweiten Verteilungsmittel mindestens umfassen: einen Durchlass (30) mit einem Durchmesser d2, der in der schalenförmigen Trennwand (5) gebildet ist, der das Fließen der zweiten Fraktion V2 der Flüssigkeit vom Hauptvorratsbehälter (3) zum Nebenvorratsbehälter (4) ermöglicht, mindestens eine sekundäre Auslassöffnung (19) mit einem Durchmesser d1, die in einem Boden (21) einer rohrförmigen Ausstülpung (20) gebildet ist, die sich unter einer Außenfläche (12) des Bodens (7) der Schüssel (2) erstreckt, und mindestens ein Rohr (23), dessen Flüssigkeitseinlassende (22) in den Nebenvorratsbehälter (4) eintaucht und dessen Flüssigkeitsauslassende (28) mit der sekundären Auslassöffnung (19) in Verbindung steht, wobei das Rohr (23) U-förmig ausgebildet ist und einen ersten Zweig (26) mit einer Länge L1 aufweist, dessen Einlassende (22) bündig mit einer Innenfläche (15) des Bodens (7) der Schüssel (2) abschließt, ohne jedoch diese zu berühren, und einen zweiten Zweig (27) mit einer Länge L2 größer als L1, der in der Ausstülpung (20) dicht gelagert ist.

2. Vorrichtung (1) nach Anspruch 1, **dadurch gekennzeichnet, dass** die ersten und zweiten Verteilungsmittel dazu geeignet sind, die Durchflussrate jeweils der ersten Fraktion V1 und der zweiten Fraktion V2 des Gesamtvolumens VT der Flüssigkeit, die aus dem Vorratsbehälter in den Behälter eingeführt wird, zu steuern.

3. Vorrichtung (1) nach einem der vorstehenden Ansprüche,
**dadurch gekennzeichnet, dass** die primäre Auslassöffnung (13) und der Kanal (14) jeweils einen Durchmesser d0 und eine Länge L aufweisen, die für die Einführung eines bestimmten Volumens der ersten Fraktion V1 der Flüssigkeit aus dem Hauptvorratsbehälter (3) in den genannten Behälter geeignet sind.

4. Vorrichtung (1) nach einem der vorstehenden Ansprüche,
**dadurch gekennzeichnet, dass** das Loch (18) im Hauptvorratsbehälter (3) und die primäre Auslassöffnung (13) in der Schüssel (2), die jeweils in der schalenförmigen Trennwand (5) und im Boden (7) der Schüssel (2) gebildet sind, auf die X-Achse der Schüssel (2) ausgerichtet sind.

5. Vorrichtung (1) nach einem der vorstehenden Ansprüche,
**dadurch gekennzeichnet, dass** der Durchmesser d1 der sekundären Auslassöffnung (19) dazu geeignet ist, dass eine gegebene Dauer des zweiten Zeitraums LT2 erreicht wird.

6. Vorrichtung (1) nach einem der vorstehenden Ansprüche,
**dadurch gekennzeichnet, dass** bei festgelegtem Durchmesser d0 der primären Auslassöffnung (13) und der Länge L des Kanals (14) die Länge L1 des ersten Zweigs (26) des Rohrs (23) und der Durchmesser d2 des Durchlasses (30) so gewählt sind, dass eine Zeitspanne P, die zwischen dem ersten Zeitraum LT1 und dem zweite Zeitraum LT2 liegt, während der keine Flüssigkeit aus der Schüssel 2 fließt, beobachtet wird.

7. Vorrichtung (1) nach einem der vorstehenden Ansprüche,
**dadurch gekennzeichnet, dass** das Rohr (23) aus flexiblem Material besteht und in seiner U-Form durch ein Stützelement (24) geführt wird, das eine U-förmige Rinne (25) aufweist, in der es gelagert ist.

8. Vorrichtung (1) nach einem der vorstehenden Ansprüche,
**dadurch gekennzeichnet, dass** die ersten Verteilungsmittel eine einzige primäre Auslassöffnung (13) mit einem Durchmesser d0 sowie einen einzigen Kanal (14) mit einer Länge L umfassen, der die primäre Auslassöffnung (13) mit dem Hauptvorratsbehälter (3) verbindet, während die zweiten Verteilungsmittel drei Durchlässe (30) mit einem Durchmesser d2 und drei sekundäre Auslassöffnungen (19) mit einem Durchmesser d1 umfassen, die jeweils mit dem Auslassende (28) eines U-förmigen Rohrs (23) verbunden sind.

9. Vorrichtung (1) nach dem vorstehenden Anspruch,
**dadurch gekennzeichnet, dass** die drei Durchlässe (30) und die drei sekundären Auslassöffnungen (19) auf Kreisen mit dem Radius R1 bzw. R2 verteilt sind, deren Mittelpunkt die primäre Auslassöffnung (13) ist.

10. Vorrichtung (1) nach dem vorstehenden Anspruch,
**dadurch gekennzeichnet, dass** R1 kleiner als R2 ist und dadurch, dass die drei Durchlässe (30) und die drei sekundären Auslassöffnungen (19) in gleichmäßigen Abständen voneinander in einem Winkel von 120° angeordnet sind.

11. Vorrichtung (1) nach einem der vorstehenden Ansprüche,
**dadurch gekennzeichnet, dass** der Boden (7) der Schüssel (2) eine konvex geformte Innenseite (15) aufweist.

12. Vorrichtung (1) nach einem der vorstehenden Ansprüche,
**dadurch gekennzeichnet, dass** die schalenförmige Trennwand (5) abnehmbar ist und einen Rand (8) aufweist, der dazu geeignet ist, auf einer freien Kante (9) der Umfangswand (6) der Schüssel (2) aufzuliegen.

## Claims

1. Device (1) for introducing a liquid in a controlled manner into a container, such as in particular water into a coffee filter, comprising a bowl (2) which is suitable for resting on said container and is formed by a peripheral wall (6) having a bottom (7), and comprising a reservoir intended for receiving a total volume VT of a liquid, first dispensing means suitable for introducing a first fraction V1 of the total volume VT of liquid contained in the reservoir into the container in a first time period LT1, and second dispensing means suitable for introducing a second fraction V2 of the total volume VT of liquid contained in the reservoir into the container in a second time period LT2 following the first time period LT1, **characterized in that** the reservoir of the bowl (2) is divided into a main reservoir (3) and a secondary reservoir (4) by means of a dish-shaped partition (5) extending in a transverse plane over the bottom (7) of the bowl (2), **and in that** the main reservoir (3) is defined by the upper compartment while the secondary reservoir (4) is defined by the lower compartment **and in that** the first dispensing means comprise at least one primary outlet opening (13) formed in the bottom (7) of the peripheral wall (6) of the bowl (2) and at least one conduit (14), of which a first liquid inlet end (17) dips into the main reservoir (3), through a hole (18) formed in the dish-shaped partition (5), and of which a second liquid outlet end (16) communicates with said primary outlet opening (13) **and in that** the second dispensing means comprise at least one aperture (30), of diameter d2, formed in the dish-shaped partition (5), allowing the flow of the second liquid fraction V2 from the main reservoir (3) to the secondary reservoir (4), at least one secondary outlet opening (19), of diameter d1, formed in a bottom (21) of a tubular protuberance (20) extending under an external face (12) of the bottom (7) of the bowl (2), and at least one tube (23), of which a liquid inlet end (22) dips into the secondary reservoir (4) and of which a liquid outlet end (28) communicates with said secondary outlet opening (19), said tube (23) being U-shaped and having a first branch (26) of length L1, the inlet end (22) of which is flush with an internal face (15) of the bottom (7) of the bowl (2) but does not touch it, and a second branch (27) of length L2 greater than L1, housed in a sealed manner in said protuberance (20).

2. Device (1) according to claim 1, **characterized in that** the first and second dispensing means are suitable for controlling the flow rate of the first fraction V1 and the second fraction V2, respectively, of the total volume VT of liquid introduced from said reservoir into said container.

3. Device (1) according to any of the preceding claims, **characterized in that** the primary outlet opening (13) and the conduit (14) respectively have a diameter d0 and a length L suitable for achieving an introduction of a given volume of the first fraction V1 of liquid from the main reservoir (3) into said container.

4. Device (1) according to any of the preceding claims, **characterized in that** the hole (18) in the main reservoir (3) and the primary outlet opening (13) in the bowl (2), respectively formed in the dish-shaped partition (5) and in the bottom (7) of the bowl (2), are aligned on the axis X of the bowl (2).

5. Device (1) according to any of the preceding claims, **characterized in that** the diameter d1 of the secondary outlet opening (19) is suitable for achieving a given duration of the second time period LT2.

6. Device (1) according to any of the preceding claims,
**characterized in that,** the diameter d0 of the primary outlet opening (13) and the length L of the conduit (14) being fixed, the length L1 of the first branch (26) of the tube (23) and the diameter d2 of the aperture (30) are chosen in such a way that a period P between the first time period LT1 and the second time period LT2 is observed in which no liquid flows out of the bowl 2.

7. Device (1) according to any of the preceding claims, **characterized in that** the tube (23) is made of a flexible material and is guided in its U-shape by means of a support member (24) having a U-shaped channel (25) in which it is housed.

8. Device (1) according to any of the preceding claims, **characterized in that** the first dispensing means comprise a single primary outlet opening (13) of diameter d0 and a single conduit (14) of length L connecting said primary outlet opening (13) to the main reservoir (3), while the second dispensing means comprise three apertures (30) of diameter d2, and three secondary outlet openings (19) of diameter d1, each communicating with the outlet end (28) of a U-shaped tube (23).

9. Device (1) according to the preceding claim, **characterized in that** the three apertures (30) and the three secondary outlet openings (19) are distributed on circles centered on the primary outlet opening (13), of radius R1 and radius R2 respectively.

10. Device (1) according to the preceding claim, **characterized in that** R1 is less than R2 **and in that** the three apertures (30) and the three secondary outlet openings (19) are evenly spaced apart at an angle of 120°.

11. Device (1) according to any of the preceding claims, **characterized in that** the bottom (7) of the bowl (2) has a convex inner face (15).

12. Device (1) according to any of the preceding claims, **characterized in that** the dish-shaped partition (5) is removable and has a rim (8) suitable for resting on a free edge (9) of the peripheral wall (6) of the bowl (2).
